# EUROPEAN PATENT APPLICATION

(11) **EP 4 550 720 A1**
(43) Date of publication of application: **07.05.2025**
(21) Application number: 23830935.5
(22) Date of filing: 29.05.2023
(51) Int. Cl.: H04L 9/32

(54) **METHOD FOR CONFIGURING BLOCK CHAIN NETWORK, AND COMPUTER SOFTWARE PROGRAM FOR IMPLEMENTING SUCH METHOD**

(30) Priority: 30.06.2022 JP 2022105620
(71) Applicant: Countup Co., Ltd., Zushi-shi, Kanagawa 249-0006 (JP)
(72) Inventor: PAJEK Jakub, Zushi-shi, Kanagawa 249-0006 (JP); ISHIDA Atsuki, Zushi-shi, Kanagawa 249-0006 (JP); OIZUMI Hiroshi, Zushi-shi, Kanagawa 249-0006 (JP)
(74) Representative: Dennemeyer & Associates S.A.
(86) International application number: PCT/JP2023/019955
(87) International publication number: WO 2024/004485

(57) **Abstract**

There is provided a method capable of continuing to execute consensus building (consensus) without stopping the blockchain, even in a situation where many nodes are down or disconnected. There is provided a method for configuring a blockchain network, comprising a step of managing nodes of detecting, by computers, whether a certain number of nodes among nodes constituting a virtual network, are disconnected from the virtual network, and if that is detected, migrating the virtual network to a Voter Ring virtual network constituted only by the Voter nodes.

## Description

### FIELD OF THE INVENTION

The present invention relates to a method for configuring a blockchain network.

### BACKGROUND OF THE INVENTION

A blockchain network is an autonomous distributed system in which many computers, smartphones and the like participate as nodes to thereby increase the security and reliability of the entire network and prohibit data tampering or fraud.

Here, in order to maintain the blockchain network secure, it is desirable that the nodes participating in the network are always connected to the network and operating properly, but it is currently difficult to achieve.

In other words, for example, networks that small mobile terminals such as smartphones can connect to are generally Wi-Fi or mobile networks, which are often significantly inferior in terms of connection stability and traffic performance to network lines used by high-performance servers such as those hosted in data centers. For this reason, it is considered that terminals may be frequently disconnected from the network and reconnected again.

In addition, when applications such as for games and video viewing, which significantly consume processor processing power and memory, are executed on such small mobile terminals, the resources allocated to a blockchain application may be depleted, compromising its operation.

Under such circumstances, if hypothetically a situation occurs in such a way that more than half of the nodes are disconnected from a blockchain network, that blockchain network would not be able to add new blocks and would effectively stop functioning.

### SUMMARY OF THE INVENTION

### Problem to be solved by the invention

Considering the above situation, the purpose of the present invention is to provide a system and a method capable of continuing to execute consensus building (consensus) without stopping the blockchain, even in a situation where many nodes are down or disconnected.

### Means for Solving the Problem

In order to overcome the above challenges, the following invention is provided according to a principal aspect of the present invention.
(1) A method for configuring a blockchain network, comprising a step of
   managing nodes, by computers, by retaining information on nodes related to consensus building for adding data received via a P2P network to a blockchain, and determining a node which is to sign based on a consensus algorithm;
   wherein, the step of managing nodes
   manages, by the computers, nodes participating in the consensus building by defining the participating nodes and distinguishing them between Voter nodes, which are operating in relatively stable environments, and Signer nodes, which are remaining non-Voter nodes, and connects these nodes among one another to thereby build a ring-like virtual network,
   wherein, the step of managing nodes comprises steps of
   detecting, by the computers, whether a certain number of nodes among nodes constituting the virtual network, are disconnected from the virtual network, and if that is detected, migrating the virtual network to a Voter Ring virtual network constituted only by the Voter nodes.
(2) The method of the above (1), further comprising steps of
   executing, by the computers, the consensus algorithm for performing the consensus building for adding data received via the P2P network to the blockchain,
   wherein the step of executing the consensus algorithm performs the consensus building only with the Voter nodes if the virtual network has migrated to the Voter Ring virtual network constituted only by the Voter nodes.
(3) The method of the above (1), wherein
   the step of managing nodes comprises steps of
   monitoring, by the computers, block addition, by detecting that the addition of new blocks no longer occurs at each block-signing timing to thereby detect whether a certain number of nodes are disconnected from the network; and
   when the above is detected during the step of monitoring block addition, entering a mode for checking whether or not no blocks are signed for a certain period of time, and if no new blocks are added to the blockchain after that period, migrating the network to the Voter Ring, which is constituted only by the Voters.
(4) The method of the above (1), further comprising the step of
   distinguishing, by the computers, whether a block addition is by a Voter Ring mode, or the block addition is a normal block addition, by changing a difficulty value recorded in the block.
(5) The method of the above (4), wherein
   when the difficulty value is changed, a range of the changed value is set higher for the block addition by the Voter Ring mode than for the normal block addition.
(6) The method of the above (4), wherein
   when a Signer node returns to the network and when it becomes its turn to sign, if it determines that a previous block was written in the Voter Ring, the reinstated Signer signs a new block by specifying a difficulty in a range higher than the range in the Voter Ring to thereby promote a return from the Voter Ring to the normal Ring.
(7) The method of the above (6), wherein
   based on all Signer nodes having confirmed a difficulty greater than the difficulty of the Voter Ring, the difficulty value is restored to its original value, a Voter Ring state is dissolved, and a normal state, in which all nodes participate, is restored.
(8) A computer software program for building and maintaining a blockchain network
   for causing computers to execute a step of managing nodes by retaining information on nodes related to consensus building for adding data received via a P2P network to the blockchain, and determining a node which is to sign based on a consensus algorithm,
   wherein, the step of managing nodes
   manages, by the computers, nodes participating in the consensus building by defining the participating nodes and distinguishing them between Voter nodes, which are operating in relatively stable environments, and Signer nodes, which are remaining non-Voter nodes, and connects these nodes among one another to thereby build a ring-like virtual network,
   wherein, the step of managing nodes comprises the step of
      detecting, by the computers, whether a certain number of nodes among nodes constituting the virtual network, are disconnected from the virtual network, and if that is detected, migrating the virtual network to s Voter Ring virtual network constituted only by the Voter nodes.
(9) The computer software program of the above (8), further comprising the step of
   executing the consensus algorithm by causing the computers to perform the consensus building for adding data received via the P2P network to the blockchain,
   wherein the step of executing the consensus algorithm performs the consensus building only with the Voter nodes if the virtual network has migrated to the Voter Ring virtual network constituted only by the Voter nodes.
(10) The method of the above (8), wherein
   the step of managing nodes comprises the step of
   monitoring, by the computers, block addition, by detecting that the addition of new blocks no longer occurs at each block-signing timing to thereby detect whether a certain number of nodes are disconnected from the network; and
   when the above is detected during the step of monitoring block addition, entering a mode for checking whether or not no blocks are signed for a certain period of time, and if no new blocks are added to the blockchain after that period, migrating the network to the Voter Ring, which is constituted only by the Voters.
(11) The method of the above (8), further comprising the step of
   distinguishing, by the computers, whether a block addition is by a Voter Ring mode, or the block addition is a normal block addition, by changing a difficulty value recorded in the block.
(12) The method of the above (11), wherein
   when the difficulty value is changed, a range of the changed value is set higher for the block addition by the Voter Ring mode than for the normal block addition.
(13) The computer software program of the above (11), wherein
   when a Signer node returns to the network and when it becomes its turn to sign, if it determines that a previous block was written in the Voter Ring, the reinstated Signer signs a new block by specifying a difficulty in a range higher than the range in the Voter Ring to thereby promote a return from the Voter Ring to the normal Ring.
(14) The computer software program of the above (13), wherein
   based on all Signer nodes having confirmed a difficulty greater than the difficulty of the Voter Ring, the difficulty value is restored to its original value, a Voter Ring state is dissolved, and a normal state, in which all nodes participate, is restored.

Note that features and marked effects of the present invention other than those described above are disclosed in the following description of an embodiment of the invention and accompanying drawings.

### BRIEF DESCRIPTION OF THE DRAWINGS

Fig. 1 is a schematic structural view of a system showing one embodiment of the present invention;
Fig. 2 is a schematic view showing a Sealer Ring according to the embodiment;
Fig. 3 is a schematic view showing a state in which a number of Sealers stopped their operation according to the embodiment;
Fig. 4 is a schematic view showing a Voter Ring according to the embodiment;
Fig. 5 is a flowchart showing a processing logic when a new block is generated according to the embodiment;
Fig. 6 is a flowchart showing a processing logic when a new block is received according to the embodiment;
Fig. 7 is a flowchart showing a check processing in the Sealer Ring according to the embodiment; and
Fig. 8 is a flowchart showing a check processing in the Voter Ring according to the embodiment.

### DETAILED DESCRIPTION OF THE INVENTION

One embodiment of the present invention will be described below with reference to accompanying drawings.

### (One embodiment)

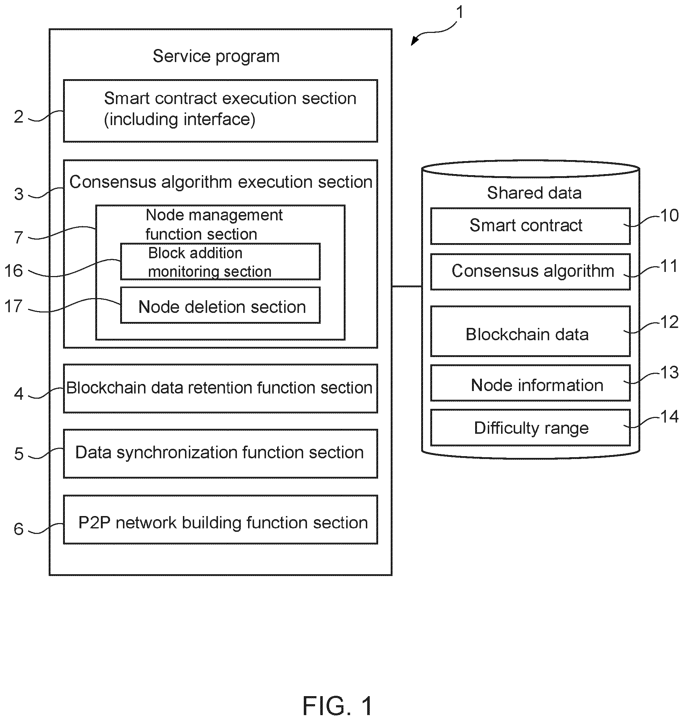

Fig. 1 shows a configuration of a blockchain execution server module 1 (computer software program), which is one embodiment of the present invention.

This execution server module 1 is a service program for building a blockchain network and may run on a server machine such as Linux^{®}, or it may be incorporated into an application program and run on a mobile terminal. In that case, this module 1 is stored on a storage medium implemented on each device, and will be called and executed by the device's CPU (not shown) on the device's memory (not shown) as needed, to thereby operate as a respective configuration of the invention.

This execution server module 1 has, as shown in Fig. 1, a smart contract execution section 2, a consensus algorithm execution section 3, a blockchain data retention function section 4, a data synchronization function section 5, and a P2P network construction function section 6. Here, the smart contract execution section 2 also provides an interface to the blockchain. The consensus algorithm execution section 3 also provides a node management function section 7.

Each of these components 2-7 has access to shared data 9 for storing a smart contract 10, a consensus algorithm 11, blockchain data 12, node information 13, and a difficulty range 14.

Detailed configuration and function of each of these components will be described below through their operations.

(Functions of the smart contract execution section, the blockchain data retention function section, the data synchronization function section, and the P2P network building function section)

The smart contract execution section 2 is a virtual machine for, in response to an external call and/or data transfer to the blockchain network, executing a specific method (update method) of the smart contract 10 stored in the shared data 9, and returning the result.

The P2P network building function section 6 executes functions of building a new node as a member of a blockchain P2P network and connecting blockchain execution servers among one another. In other words, in order to invoke and execute a method of the smart contract 10, a node for accessing the blockchain network is needed. In order to cause a node to newly join a blockchain network, one of existing nodes must make the new node to become a member of the blockchain's P2P network.

The data synchronization function section 5 synchronizes the latest blockchain data 12 at each node, and at the time of this synchronization, retrieves data 11 from other nodes connected via P2P, verifies its correctness, and stores it as the shared data 9. The blockchain data retention function section 4 retains the above blockchain shared data (blockchain data 12) in a storage area of servers or mobile terminals.

In the invocation of the update method of the above smart contract 10, a transaction is assembled and sent from each node to the blockchain network. This transaction is propagated to all nodes that constitute the blockchain network. At this time, each node queues the transaction as a transaction waiting to be stored in a block. Since it takes a certain amount of time for a transaction to be stored in a block, the update method is, in principle, an asynchronous process.

Execution of the update method of the smart contract 10 corresponds to the invoking transaction of the method being stored in a new block. The timing of the execution of the update method is when a new block is created by a block-creating node as well as when other nodes that are not the block-creating node receive the new block and verify its correctness.

The smart contract 10 is executed in exactly the same way on all nodes on the blockchain network, and the state updates associated with the processing reach the same result.

The invocation and execution of the smart contract 10 reference method returns an immediate result using a verified smart contract code and an internal state that the node itself has. The smart contract 10 can be executed as above because all nodes on the blockchain network share data 11 as described above.

Note that what are shared include not only blocks and transactions, but also the code and the internal state of the smart contract. This allows any node to replay the execution of the smart contract from the transaction stored in the block and independently verify the correctness of the internal state updates associated with the execution. Such a mechanism allows the blockchain's tamper-resistance and other characteristics to be enabled as in a smart contract execution platform.

### (Consensus algorithm execution section)

Next, the consensus algorithm execution section 3 of this embodiment will be described.

The consensus algorithm 11 in the present embodiment is based on Proof of Authority (PoA). This PoA is a consensus algorithm based on the idea that only trusted nodes can sign a block, and is a consensus algorithm in which nodes called Sealers form a ring-like virtual network and take turns signing blocks at specified time intervals.

In this embodiment, participation in a network employing this algorithm requires being authorized and trusted via eKYC or the like (Authority), and in that sense, although it is centralized, malicious participants may be eliminated on a practical level.

Below, a consensus algorithm 11 having such a concept will be described by way of example implemented in the consensus algorithm execution section 3 and the node management function section 7 of this embodiment.

This consensus algorithm execution section 3 executes consensus building for adding data received via the above P2P network to the blockchain. Thus, it retains node information 13 related to the consensus building. Then, the node management function section 7 provided in this consensus algorithm execution section 3 manages and determines nodes to sign based on the consensus algorithm 11.

Operations by this consensus algorithm execution section 3 and the node management function section 7 will be described below.

### (Signer and Voter)

The above node management function section 7 manages nodes participating in consensus building by dividing them into Signers and Voters. Signers are nodes assumed to operate on mobile terminals, whereas Voters are ones operating on server computers, such as those hosted in data centers, where computational resources such as a network, power sources, and the like may be amply provided.

**Table 1**

| | |
|---|---|
| Voter | Special node with voting rights to not only sign blocks, but also to add and/or remove Signers from the blockchain network, and is built in a data center or the like capable of securing stable operations. |
| Signer | Node which only signs blocks, and is a common node which participates in the present blockchain network via Authority, such as eKYC, and which is also executed on mobile terminals and the like. |

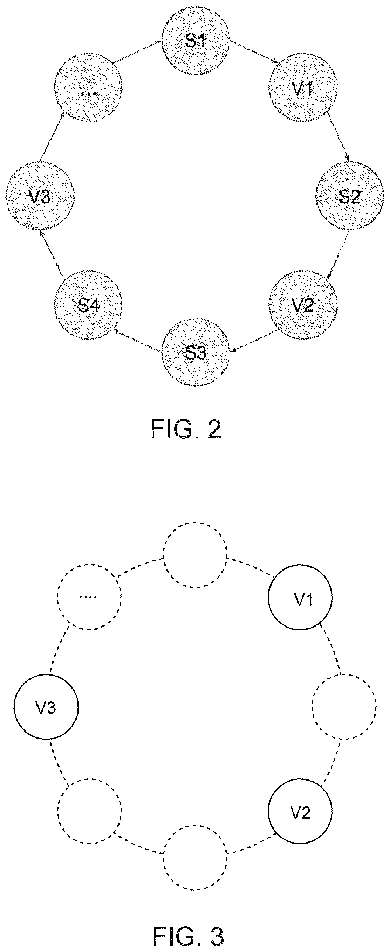

The node management function section is configured to build a ring-like virtual network, as shown in Fig. 2, with Voters and Signers and to operate the network by continuing to sign blocks containing transactions in order. Here, the Voters and Signers are called Sealers (nodes capable of signing ("sealing") blocks and adding them to the blockchain: Sealers). In this figure, blocks are signed in turn, in such an order as S1 -> V1 - > S2 -> V2, to be added to the blockchain.

### (Node management in Sealer Ring)

This healthy state is called the Sealer Ring. Hypothetically, from this Sealer Ring, all Signers are considered to be disconnected from the blockchain network due to a general failure of the mobile network. In this case, as shown in Fig. 3, only Voters can keep the network running because they are built on a stable infrastructure (Fig. 3).

However, if more than a majority of nodes are disconnected from the network, valid consensus building is no longer possible, which leads to disablement of adding new blocks to the blockchain, thus, the blockchain network may stop its operation.

The node management function section 7 of Voters that remain online is configured to be capable of detecting this condition. In other words, the node management function section 7 has a block addition monitoring section 16, which detects this by detecting that the addition of new blocks no longer occurs at each block-signing timing (normally, all nodes detect addition of new blocks and update their own blockchain).

Once this is detected by the block addition monitoring section 16, the node management function section 7 of the Voters each enters a mode for checking whether or not no blocks are signed for a certain period of time, and if no new blocks are added to the blockchain after that period, the Voters migrate the network to the Voter Ring constituted only by the Voters.

### (Formation logic for Voter Ring)

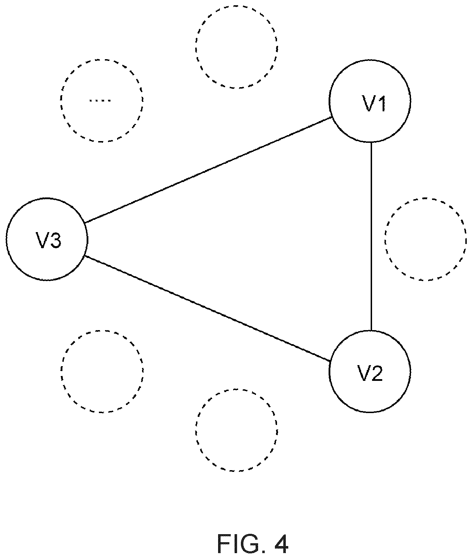

The Voter Ring forms a consensus building ring (Voter Ring) having only Voter nodes, in such a way that all valid Signers at the time are excluded (Fig. 4), and in this state, the Voters are configured to perform the usual new block signing and addition logic.

In order to form this Voter Ring, which is a consensus building ring with Voter nodes only, a difficulty range modification section, indicated with 17 in Fig. 1, modifies the difficulty range recorded in the block as shown in Table 2 to thereby distinguish between block addition by the Voter Ring and normal block addition. Difficulty is a value within a certain range. This embodiment is determined by the number of nodes, but it may be determined by other criteria.

**Table 2**

| | |
|---|---|
| Difficulty range written to the block in the normal case | difficulty = <1, number of all nodes> |
| Difficulty range written to the block in the Voter Ring case | difficulty = <number of all nodes + 1, number of all nodes + number of Voters> |

### (Return logic to Sealer Ring)

Next, when a mobile terminal (Signer) that was disconnected from the network comes back online, the returning node first performs data synchronization to match the latest blockchain state.

Once the synchronization is complete, the node management function section 7 of the Signer detects whether the current blockchain was operating in the normal state or in the Voter Ring by referring to the difficulty included in the block.

When it becomes the reinstated Signer's turn to sign, if it determines that the previous block was written in the Voter Ring, the restored Signer signs a new block after specifying a difficulty range greater than the difficulty range in the previous Voter Ring to thereby promote a return from the Voter Ring to the normal Ring.

**Table 3**

| | |
|---|---|
| New difficulty range required for reinstatement | difficulty = <number of all nodes + number of Voters + 1, 2*number of all nodes + number of Voters> |

Once the node management function section 7 in every Voter confirms a difficulty value exceeding the Voter Ring difficulty, the Voter Ring state is resolved and a normal state with all nodes participating is restored.

Thus, all Voters dissolve the Voter Ring state and all active Sealers will participate. The network transitions to the normal mode of Sealer Ring. Then, the difficulty range modification section 17 restores the difficulty range to the normal state range.

### (Process flow when a new block is generated)

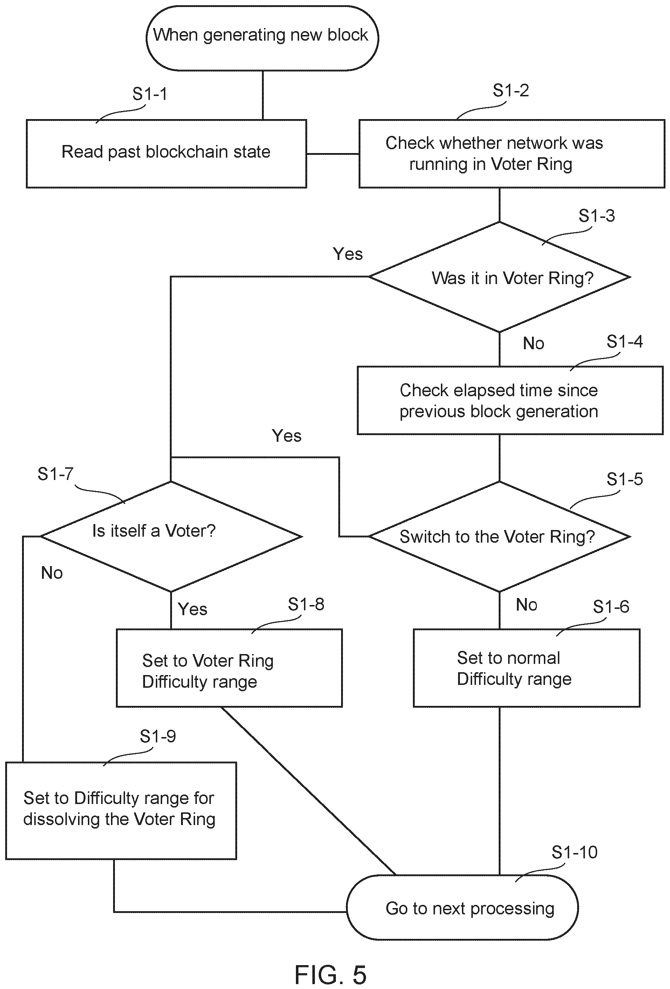

Fig. 5-Fig. 8 show flowcharts of a specific example of the transition logic between the above Sealer Ring and Voter Ring.

Fig. 5 shows a logic for determining the Difficulty when a new block is generated, that is, when the sealer itself signs the block.

Namely, when a new block is generated, the past blockchain state is read and the difficulty is verified to thereby check whether the network was running in the Voter Ring (Steps S1-1 and S1-2). If it is not a Voter Ring (Step S1-3), an elapsed time since the previous block generation is checked (Step S1-4), and if a certain amount of time has elapsed, the decision to switch to the Voter Ring is made (S 1-5); whereas if a certain period of time has not elapsed, the switching to the Voter Ring is not performed and the normal difficulty range is set (Step S1-6).

On the other hand, if the network already runs in the Voter Ring or if it is determined to switch to the Voter Ring, the node determines whether or not itself is a Voter (Step S1-7), wherein if it is a Voter, it sets the difficulty range to that of the Voter Ring (Step S1-8), and conversely, if it is not a Voter (i.e., if the node itself is a Signer), it sets the difficulty range for dissolving the Voter Ring (Step S1-9).

This node then continues the processing of adding new blocks with the difficulty range determined as above (Step S1-10).

### (Process flow when receiving and adding a new block)

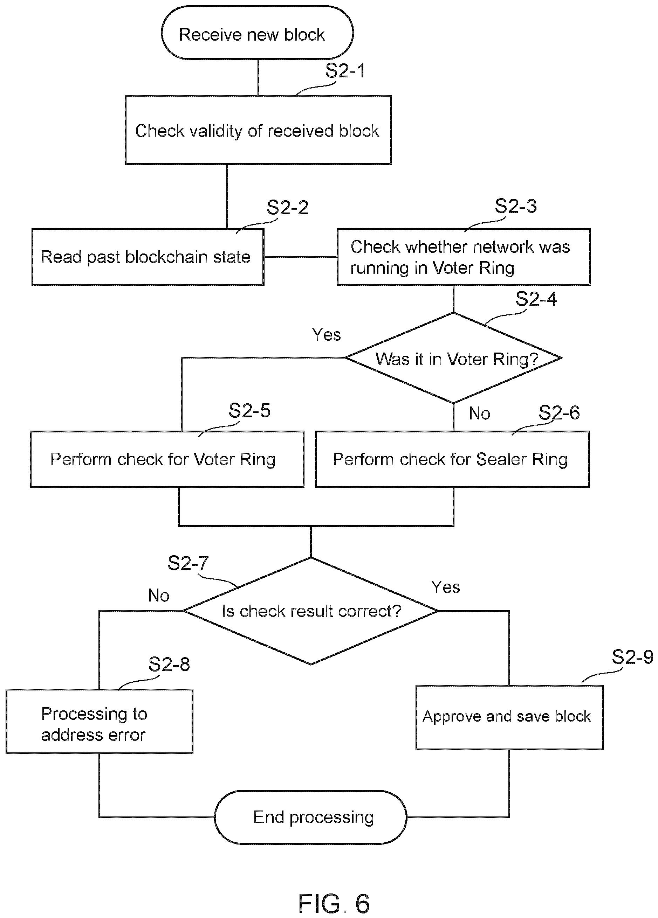

Fig. 6 shows a logic for adding a new block when a new block is received at the sealer.

In other words, this logic executes Steps S2-2 and later as part of or after the process of checking the validity of the received block (Step S2-1).

First, after reading the past blockchain state in Step S2-2, whether the network was running in the Voter Ring is checked based on a difficulty value included in the block (Step S2-3).

Then, if it is determined in Step S2-4 that the network is in the Voter Ring, a check for the Voter Ring is performed (Step S2-5), and if it is determined in Step S2-4 that the network is not in the Voter Ring, a check for the Sealer Ring is performed (Step S2-6). If the check result is correct in Step S-7, the block is approved and saved (Step S-8); if the check result is not correct, an error is returned (Step S2-9).

### (Processing flow of check execution in Sealer Ring)

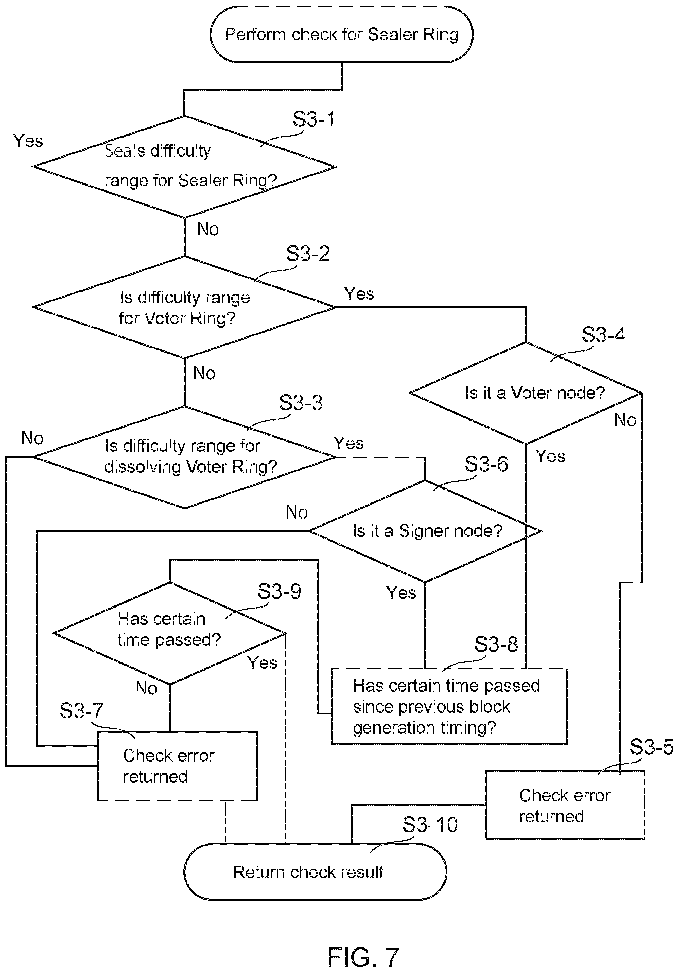

Fig. 7 shows a processing flow of check execution in the Sealer Ring, which is performed in Step S2-6 in the above approval processing of the new block addition (Fig. 6).

Namely, in this processing, in Steps S3-1 to 3-3, it is determined whether the difficulty range is for the Sealer Ring, Voter Ring, or Voter Ring dissolution, respectively, and if the range is within the Voter Ring, whether the node itself is a Voter node, is determined (S3-4), wherein if it is not a Voter node, an error is returned as a check result (S3-5), and if it is a Voter node, a positive check result is returned only if a certain time has passed since the previous block generation timing (Step S3-6).

On the other hand, if the difficulty range is determined to be that within the Voter Ring dissolution in Step S3-3, if the node itself is not a Signer node (determined in Step S3-6), an error is returned as a check result (Step S3-7), and if it is a Signer node (determined in Step S3-6), a positive check result is returned (Step S3-10) only when it is determined that a certain time has passed since the previous block generation timing (S3-8, 3-9).

### (Processing flow of check execution in Voter Ring)

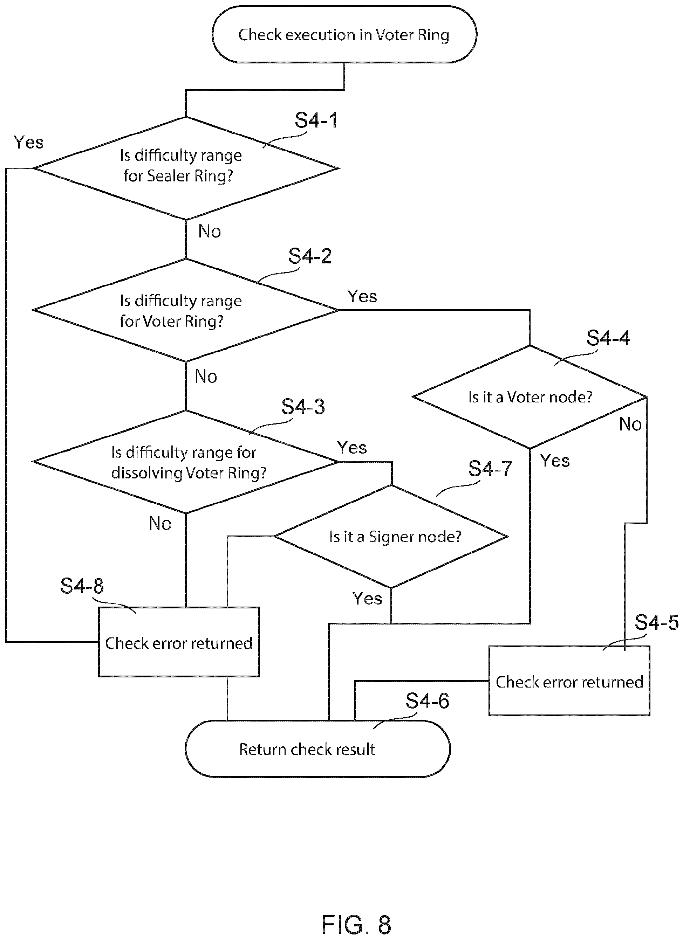

Fig. 8 shows a processing flow of check execution in the Voter Ring, which is performed in Step S2-5 in the above processing of approving the new block addition (Fig. 6).

Namely, in this processing, in Steps S4-1 to 4-3, it is determined whether the difficulty range is for the Sealer Ring, Voter Ring, or Voter Ring dissolution, respectively, and if the range is within the Voter Ring (S4-2), whether the node itself is a Voter node, is determined (S4-4), wherein if it is not a Voter node, an error is returned as a check result (S4-5), and if it is a Voter node, a positive check result is returned (Step S4-6).

On the other hand, if the difficulty range is within the Voter Ring dissolution (Step S4-3), if the node itself is not a Signer node (Step S4-7), an error is returned as a check result (Step S4-8), and if it is a Signer node, a positive check result is returned (Step S4-6).

By implementing the processing of the node management function section as described above, the blockchain network is enable to continue operating stably without stopping the blockchain network, even if nodes using relatively unstable network infrastructure, such as mobile terminals, are allowed to participate.

It should be noted that the present invention is not limited to the above one embodiment, and that various changes and modifications may be made without departing from the spirit and scope of the present invention.

### Description of the Reference Numbers

1. Blockchain execution server module
3. Consensus algorithm execution section
4. Blockchain data retention function section
5. Data synchronization function section
6. P2P network building function section
7. Node management function section
9. Shared data
10. Smart contract
11. Consensus algorithm
12. Blockchain data
13. Node information
14. Difficulty range
16. Block addition monitoring section
17. Difficulty range modification section

## Claims

1. A method for configuring a blockchain network, comprising a step of managing nodes, by a computer, by retaining information on nodes related to consensus building for adding data received via a P2P network to a blockchain, and determining a which is to sign based on a consensus algorithm;
wherein, the step of managing nodes
manages, by the computer, nodes participating in the consensus building by defining the participating nodes and distinguishing them between Voter nodes, which are operating in relatively stable environments, and Signer nodes, which are remaining non-Voter nodes; and connects these nodes among one another to thereby build a ring-like virtual network,
wherein, the step of managing nodes comprises steps of
detecting, by the computer, whether a certain number of nodes among nodes constituting the virtual network, are disconnected from the virtual network, and if that is detected, migrating the virtual network to a Voter Ring virtual network constituted only by the Voter nodes.

2. The method of Claim 1, further comprising steps of
executing, by the computer, the consensus algorithm for performing the consensus building for adding data received via the P2P network to the blockchain,
wherein the step of executing the consensus algorithm performs the consensus building only with the Voter nodes if the virtual network has migrated to the Voter Ring virtual network constituted only by the Voter nodes.

3. The method of Claim 1, wherein
the step of managing nodes comprises steps of
monitoring, by the computer, block addition, by detecting that the addition of new blocks no longer occurs at each block-signing timing to thereby detect whether a certain number of nodes are disconnected from the network; and
when the above is detected during the step of monitoring block addition, entering a mode for checking whether or not no blocks are signed for a certain period of time, and if no new blocks are added to the blockchain after that period, migrating the network to the Voter Ring, which is constituted only by the Voters.

4. The method of Claim 1, further comprising a step of
distinguishing, by the computer, whether a block addition is by a Voter Ring mode, or the block addition is a normal block addition, by changing a difficulty value recorded in the block.

5. The method of Claim 4, wherein
when the difficulty value is changed, a range of the changed value is set higher for the block addition by the Voter Ring mode than for the normal block addition.

6. The method of Claim 4, wherein
when a Signer node returns to the network and when it becomes its turn to sign, if it determines that a previous block was written in the Voter Ring, the reinstated Signer signs a new block by specifying a difficulty in a range higher than the range in the Voter Ring to thereby promote a return from the Voter Ring to the normal Ring.

7. The method of Claim 6, wherein
based on all Signer nodes having confirmed a difficulty greater than the difficulty of the Voter Ring, the difficulty value is restored to its original value, a Voter Ring state is dissolved, and a normal state, in which all nodes participate, is restored.

8. A computer software program for building and maintaining a blockchain network
for causing computer to execute a step of managing nodes by causing the computer to retain information on nodes related to consensus building for adding data received via a P2P network to the blockchain, and determine nodes which are to sign based on a consensus algorithm,
wherein, the step of managing nodes
manages, by the computer, nodes participating in the consensus building by defining the participating nodes and distinguishing them between Voter nodes, which are operating in relatively stable environments, and Signer nodes, which are remaining non-Voter nodes, and connects these nodes among one another to thereby build a ring-like virtual network,
wherein, the step of managing nodes comprises a step of
detecting, by the computer, whether a certain number of nodes among nodes constituting the virtual network, are disconnected from the virtual network, and if that is detected, migrating the virtual network to a Voter Ring virtual network constituted only by the Voter nodes.

9. The computer software program of Claim 8, further comprising steps of
executing the consensus algorithm by causing the computer to perform the consensus building for adding data received via the P2P network to the blockchain,
wherein the step of executing the consensus algorithm performs the consensus building only with the Voter nodes if the virtual network has migrated to the Voter Ring virtual network constituted only by the Voter nodes.

10. The method of Claim 8, wherein
the step of managing nodes comprises the step of
monitoring, by the computer, block addition, by detecting that the addition of new blocks no longer occurs at each block-signing timing to thereby detect whether a certain number of nodes are disconnected from the network; and
when the above is detected during the step of monitoring block addition, entering a mode for checking whether or not no blocks are signed for a certain period of time, and if no new blocks are added to the blockchain after that period, migrating the network to the Voter Ring, which is constituted only by the Voters.

11. The method of Claim 8, further comprising the step of
distinguishing, by the computer, whether a block addition is by a Voter Ring mode, or the block addition is a normal block addition, by changing a difficulty value recorded in the block.

12. The method of Claim 8, wherein
when the difficulty value is changed, a range of the changed value is set higher for the block addition by the Voter Ring mode than for the normal block addition.

13. The computer software program of Claim 11, wherein
when a Signer node returns to the network and when it becomes its turn to sign, if it determines that a previous block was written in the Voter Ring, the reinstated Signer signs a new block by specifying a difficulty in a range higher than the range in the Voter Ring to thereby promote a return from the Voter Ring to the normal Ring.

14. The computer software program of Claim 13, wherein
based on all Signer nodes having confirmed a difficulty greater than the difficulty of the Voter Ring, the difficulty value is restored to its original value, a Voter Ring state is dissolved, and a normal state, in which all nodes participate, is restored.
